# EUROPÄISCHE PATENTSCHRIFT

(11) **EP 1 276 915 B1**
(45) Veröffentlichungstag und Bekanntmachung des Hinweises auf die Patenterteilung: **12.07.2006**
(21) Anmeldenummer: 01933675.9
(22) Anmeldetag: 09.03.2001
(51) Int. Cl.: C22C 38/06, F16C 33/30, C21D 9/14, C21D 9/40

(54) **WÄLZLAGERBAUTEIL**
ROLLING BEARING COMPONENT
COMPOSANT DE ROULEMENT

(30) Priorität: 22.04.2000 DE 10020118
(43) Veröffentlichungstag der Anmeldung: 22.01.2003
(73) Patentinhaber: Schaeffler KG, 91074 Herzogenaurach (DE)
(72) Erfinder: GRELL, Karl-Ludwig, 91086 Aurachtal (DE); GRUBE, Günter, 91086 Aurachtal (DE); MÜNTNICH, Leo, 91086 Aurachtal (DE)
(86) Internationale Anmeldenummer: PCT/EP2001/002673
(87) Internationale Veröffentlichungsnummer: WO 2001/081643

(56) Entgegenhaltungen:
- DE-A- 19 618 065
- DE-A- 19 834 361
- DE-B- 1 034 932
- DE-C- 3 803 064
- DE-C- 19 547 181

## Beschreibung

Die Erfindung betrifft spanlos hergestellte dünnwandige Wälzlagerbauteile, wie Wälzlagerringe, Nadelhülsen oder Nadelbüchsen, die aus einem Kaltband hergestellt sind.

### Hintergrund der Erfindung

Kaltgewalztes Stahlband wird vielfach zur Herstellung von kaltumgeformten Erzeugnissen verwendet. Die steigenden Anforderungen bezüglich der Anwendungs- und Gebrauchseigenschaften erfordern bessere mechanische, insbesondere Umformeigenschaften. Eine gute Umformbarkeit ist gekennzeichnet durch möglichst hohe, die Tiefziehbarkeit kennzeichnende r-Werte, hohe, die Streckziehbarkeit kennzeichnende n-Werte und hohe, die plane strain-Eigenschaften kennzeichnende Dehnungswerte. Dabei hat es sich als vorteilhaft erwiesen, wenn die Umformeigenschaften in den verschiedenen Richtungen, insbesondere in der Längs- der Quer- und der Diagonalrichtung möglichst gleich sind, d. h. weitgehend isotrop sind. Die Vorteile isotroper Eigenschaften drücken sich im wesentlichen in einer Gleichmäßigkeit des Stoffflußes und einer Reduzierung des Blechverschnittes aus (DE 195 47 181 C1).

In diesem Zusammenhang ist dem Fachmann bekannt, dass sogenannte HK-Lager (Hüllkreislager) wie Nadellager oder Nadelbüchsen eine wälzlagertechnische Besonderheit darstellen, die sich gegenüber massiven Wälzlagern radialer Bauart abgrenzen. Diese HK-Lager erhalten ihre Rundheit und Form durch das Einpressen in eine Bohrung und der Hülsenwerkstoff unterliegt somit permanenten Druckspannungen. Diese durch das Einpressen erzeugten Druckspannungen addieren sich zu den beim Betrieb des Lagers entstehenden Lastspannungen, so dass der verwendete Werkstoff hohe Anforderungen zu erfüllen hat. Insbesondere soll er gut umformbar sein und eine Eignung für eine Wärmebehandlung aufweisen, um die gewünschten mechanischen Kennwerte zu erreichen.

In der DE 10 34 932 ist ein Verfahren zur Herstellung eines Nadellagers beschrieben, wobei die Laufhülse zunächst mit einem festen Bord hergestellt ist, und in diese offene Hülse ein Käfig mit Wälzkörpern eingeführt wird, bevor durch Umbiegen des zweiten Bordes eine unverlierbare Baueinheit gebildet ist. Danach werden Hülse und Käfig einem gemeinsamen Härtevorgang unterworfen. Nach diesem Stand der Technik werden dünnwandige Außen- bzw. Innenringe für Nadellager aus einem tiefziehfähigen Kaltband spanlos hergestellt, wobei das Kaltband ein Einsatzstahl beispielsweise der Marken CK15, St4, C22, 15Cr3 oder 16MnCr5 ist. Voraussetzung für diesen Herstellprozeß ist eine gleichmäßige, istrope Umformfähigkeit des Kaltbandes. In einzelnen oder mehreren Stufen hintereinander werden die Teile aus dem Band bestimmter Dicke abgestreckt, kalibriert auf eine hohe Maßgenauigkeit und wanddickengleich geformt. Zur Erreichung der Verschleißfestigkeit und der geforderten Tragfähigkeit werden diese ausgeformten Teile einsatzgehärtet. Dies erfolgt durch eine Aufkohlung ohne oder mit Stickstoffzugabe (Karbonitrierung) in sogenannten Einsatzhärteöfen bei Temperaturen zwischen 830 und 930 °C. Je nach erforderlicher Einhärtetiefe bedeutet dies eine Wärmebehandlung bis 2 Stunden und mehr.

Bekannt sind auch Herstellungsverfahren für Nadellager, bei denen die ausgeformte Hülse nach dem Härten am sog. Bördelbord nochmals induktiv angelassen wird, um den Käfig einschieben, bevor der Bördelbord anschließend wieder umgelegt wird. Dieser induktive Anlaßprozeß ist aber sehr aufwendig und damit teuer und beeinflusst die gesamte Maß- und Formgenauigkeit sowie die Rißbildung im Bördelbereich negativ.

### Zusammenfassung der Erfindung

Aufgabe der Erfindung ist es daher, einen gut umformfähigen, sich für eine Wärmebehandlung eignenden Werkstoff zu entwickeln, der sich insbesondere für den speziellen Anwendungsfall dünnwandiger Nadellager hervorragend eignet.

Erfindungsgemäß wird diese Aufgabe nach dem kennzeichnenden Teil von Anspruch 1 dadurch gelöst, dass das Kaltband ein Vergütungsstahl mit nachstehenden mechanischen Kennwerten ist:
- eine Zugfestigkeit ≦ 480 N/mm²
- eine Bruchdehnung ≧ 24%
- eine Streckgrenze ≦ 380 N/mm²
- einen Anisotropie-Wert R von 0,85 bis 1,05, mit einem ΔRmax = 0,3 mm
und das kaltumgeformte Wälzlagerbauteil nach einer aufkohlenden oder aufstickenden Austenitisierung eine Oberflächenhärte von ≧ 700 HV und eine Kemhärte von ≦ 650 HV aufweist, wobei der Vergütungsstahl nachstehende chemische Zusammensetzung aufweist:
- 0,30 - 0,55 % C
- max. 0,15 % Si
- 0,3 - 1,0 % Mn
- max. 0,15 % Mo
- max. 0,50 % Cr
- max. 0,015 % P
- max. 0,005 % S
- max. 0,20 % Cu
- max. 0,20 % Ni
- max. 0,005 % Sn
- max. 0,002 % Sb
- 0,60 - 1,25 % Summe Cu, Ni, Mn, Cr
- 0,002 - 0,080% Summe Al, Ti, Nb,
- 0,004-0,010% N₂

Die aus dem Kaltband gefertigten Wälzlagerbauteile, wie beispielsweise Hülsen bzw. Büchsen werden mit oder ohne kompletter Befüllung mittels Kurzzeiterwärmung in einem Durchlaufhärteofen mit einer aufkohlenden Schutzatmosphäre innerhalb von wenigen Minuten, bis zu maximal 30 Minuten, austenitisiert, wobei eine geringfügige Entkohlung vom Kaltband durch eine aufkohlende Schutzgasatmosphäre ausgeglichen wird. Eine verstärkte Zufuhr von Kohlenstoff oder Stickstoff mittels gezielter Aufkohlungsatmosphäre führt nun zu einer Oberflächenhärte am Endbauteil von mindestens 700 HV und einen bestimmten Volumenanteil von Restaustenit und Martensit. Die neue charakteristische Eigenschaft dieses vergüteten Bauteils besteht darin, dass die tiefergehenden Werkstoffschichten aufgrund ihrer Legierungszusammensetzung in Abhängigkeit von Wanddicke und Abschreckbedingungen eine tragfähige Vergütungsfestigkeit mit hinreichender Plastifizierbarkeit erhalten.

Vorteilhafte Ausführungen der Erfindung sind in den Unteransprüchen 2 bis 7 beschrieben.

Nach einem anderen Merkmal der Erfindung gemäß Anspruch 2 soll die Oberflächenhärte 860 - 880 HV und die Kemhärte 550 - 650 HV betragen.

Nach Anspruch 3 ist vorgesehen, dass das Kaltband in Abhängigkeit von seiner Wanddicke nachstehende chemische Zusammensetzung aufweist:

| | |
|---|---|
| 0,6 - 1,1 mm: | 0.30 - 0,40 % C, max. 0,10 % Si, 0,4 - 0.6 % Mn, max. 0,05 % Mo, 0,20 - 0,30 % Cr, 0,015 % P, 0,005 % S, |
| 1,1 - 1,8 mm: | 0,30 - 0,50 % C, max. 0,10 % Si, 0,6 - 0,8 % Mn, max. 0,05 % Mo, 0,20 - 0,30 % Cr, 0,015 % P, 0,005 % S, |
| 1,8 - 3,5 mm: | 0,40 - 0,55 % C, 0,10 % Si, 0,8 - 1,0 % Mn, 0,15 % Mo, 0,30 - 0,40 % Cr, 0,015 % P, 0,005 % S. |

Da die Härtbarkeit, wie dem Fachmann bekannt, von der chemischen Zusammensetzung und der Wanddicke des Kaltbandes abhängig ist, wird durch die Abstufung der Legierungselemente erreicht, dass bei allen Stärken des Kaltbandes immer die gewünschte Kemhärte von 550-650 HV erreicht wird.

Aus den Ansprüchen 4 und 5 geht hervor, dass der Käfig aus einem Einsatzstahl der Marke St3, Ck15 oder C22 besteht und die Wälzkörper aus einem durchhärtenden Stahl der Marke 100Cr6 gefertigt sind. Wird die gesamte Lagerbaueinheit der Wärmebehandlung unterzogen, so führt das beim Käfig zu einer steigenden Verschleißfestigkeit und auch zu einer Verbesserung der zu ertragenden Dauerschwingbeanspruchungen. Die Wälzkörper wie Nadeln oder Kugeln aus 100Cr6 werden durch das beschriebene Wärmebehandlungsverfahren ebenfalls nochmals hinreichend gehärtet und erleiden so keinen Nachteil. Insgesamt wird durch die Kombination von Werkstoff- und Wärmebehandlungsverfahren ein verzugsarmes Lager geschaffen, welches sich durch eine wirtschaftliche Fertigung auszeichnet.

Um die gewünschten mechanischen Eigenschaften der Wälzlagerbauteile zu erhalten, ist nach Anspruch 6 vorgesehen, dass die Austenitisierung in einer aufkohlenden oder aufkohlenden/aufstickenden Schutzgasatmosphäre bei 840 - 870°C innerhalb von maximal 30 Minuten erfolgt.

Aus Anspruch 7 geht hervor, dass das Anlassen in einem Temperaturbereich von 180 - 280°C erfolgt, so dass ein Gefügegemenge aus Martensit und Austenit entsteht und entsprechend des Volumenanteils Austenit zu Martensit eine steuerbare Maß- und Formänderung des Teils erreicht werden kann, da bei höherer Anlaßtemperatur der Austenit in Martensit umgewandelt und unterschiedliche spezifische Atomgitterdicken vorliegen.

Die Erfindung wird an nachstehendem Ausführungsbeispiel näher erläutert.

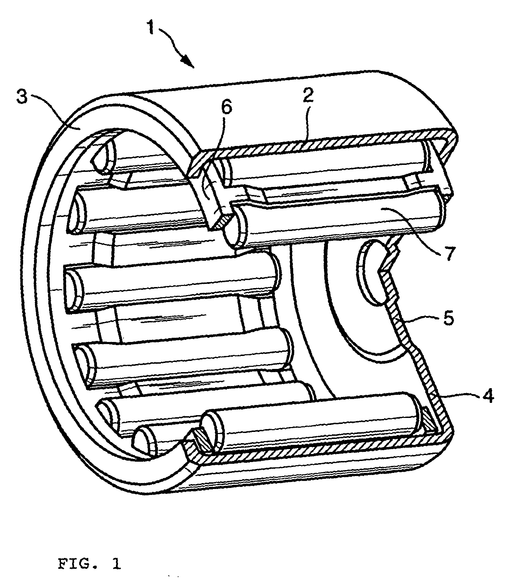

### Kurze Beschreibung der Zeichnung

Die einzige Figur zeigt eine perspektivisch dargestellte Nadelhülse.

### Ausführliche Beschreibung der Zeichnung

Die in der Figur gezeigte und mit 1 bezeichnete Nadelbüchse weist einen Radialabschnitt 2 mit kreisringförmigem Profil auf, der an einem Ende in den radial nach innen gerichteten Bord 3 übergeht und am anderen Ende durch den Boden 4 verschlossen ist. Zwischen dem mit der Erhebung 5 versehenen Boden 4 und dem Bord 3 wälzen im Käfig 6 geführte Lagernadeln 7 ab. Derartige Nadelbüchsen 1 schließen Lagerstellen an Wellenenden ab.

Die Nadelbüchse 1 ist durch mehrere Umformschritte spanlos aus einem 1,2 mm dicken Kaltband aus einem Vergütungsstahl mit nachstehender chemischer Zusammensetzung geformt: 0,40 % c 0,10 % Si, 0,5 % Mn 0,10 % Mo, 0,3 % Cr, 0,01 % P, 0,005 % S, 0,1 % Cu, 0,1 % Ni, 0,005 % Sn, 0,002 % Sb, wobei die Summe von Cu, Ni, Mn und Cr bei 1,02 % gelegen hat. Außerdem waren feinkornstabilisierende Elemente wie Aluminium, Titan und Niob mit einem Summenwert von 0,06 % vorhanden. Der Käfig 6 war aus einem Einsatzstahl der Marke St3 hergestellt, während die Lagernadeln 7 aus einem durchhärtenden Stahl der Marke 100Cr6 gefertigt waren. Nach dem Einlegen von Käfig 6 mit Lagernadeln 7 in die Nadelbüchse 1, wurde der Bord 3 umgebördelt, so dass eine unverlierbare Baueinheit gebildet war.

Die mit Lagernadeln 7 und Käfig 6 bestückte Nadelbüchse 1 wurde nun einer Härtebehandlung unterworfen, wobei das Komplettbauteil bei 850° 25 Minuten auf Härtetemperatur gehalten und anschließend abgeschreckt wurde. Nach dem Härtevorgang wurde ein Anlaßprozeß angeschlossen, um die Zähigkeit der Nadelbüchse zu verbessern. Dabei wurde die Baueinheit auf etwa 200° gebracht und einige Zeit gehalten. Eine durchgeführte Messung an der Nadelbüchse hat ergeben, dass eine Oberflächenhärte von 810 HV und eine Kernhärte von 600 HV ausgewiesen ist.

### Bezugszeichen

- 1: Nadelbüchse
- 2: Radialabschnitt
- 3: Bord
- 4: Boden
- 5: Erhebung
- 6: Käfig
- 7: Lagernadeln

## Patentansprüche

1. Spanlos hergestellte dünnwandige Wälzlagerbauteile, wie Wälzlagerringe, Nadelhülsen oder Nadelbüchsen (1), die aus einem Kaltband hergestellt sind, **dadurch gekennzeichnet, dass** das Kaltband ein Vergütungsstahl mit nachstehenden mechanischen Kennwerten ist:
- eine Zugfestigkeit ≦ 480 N/mm²
- eine Bruchdehnung ≧ 24%
- eine Streckgrenze ≦ 380 N/mm²
- einen Anisotropie-Wert R von 0,85 bis 1,05, mit einem ΔRmax = 0,3 mm
und das kaltumgeformte Wälzlagerbauteil nach einer aufkohlenden oder aufstickenden Austenitisierung eine Oberflächenhärte von ≧ 700 HV und eine Kernhärte von ≦ 650 HV aufweist, wobei der Vergütungsstahl nachstehende chemische Zusammensetzung aufweist
- 0,30 - 0,55 % C
- max. 0,15 % Si
- 0,3 - 1,0 % Mn
- max. 0,15 % Mo
- max. 0,50 % Cr
- max. 0,015 % P
- max. 0,005 % S
- max. 0,20 % Cu
- max. 0,20 % Ni
- max. 0,005 % Sn
- max. 0.002 % Sb
- 0,60 - 1,25 % Summe Cu, Ni, Mn, Cr
- 0,002 - 0,080% Summe Al, Ti, Nb,
- 0,004-0,010% N₂

2. Wälzlagerbauteil nach Anspruch 1, **dadurch gekennzeichnet, dass** die Oberflächenhärte 860 - 880 HV und die Kernhärte 550 - 650 HV beträgt.

3. Wälzlagerbauteil nach Anspruch 1, **dadurch gekennzeichnet, dass** das Kaltband in Abhängigkeit von seiner Wanddicke nachstehende chemische Zusammensetzung aufweist:
| | |
|---|---|
| 0,6 - 1,1 mm: | 0,30 - 0,40 % C, max. 0,10 % Si, 0,4 - 0,6 % Mn, max. 0,05 % Mo, 0,20 - 0,30 % Cr, 0,015 % P, 0,005 % S, |
| 1,1 - 1,8 mm: | 0,30 - 0,50 % C, max. 0,10 % Si, 0,6 - 0,8 % Mn, max. 0,05 % Mo, 0,20 - 0,30 % Cr, 0,015 % P, 0,005 % S, |
| 1.8 - 3,5 mm: | 0,40 - 0,55 % C, 0,10 % Si, 0,8 - 1,0 % Mn, 0,15 % Mo, 0,30 - 0,40 % Cr, 0,015 % P, 0,005 % S. |

4. Nadellager nach Anspruch 1, **dadurch gekennzeichnet, dass** ein Käfig (6) aus einem Einsatzstahl der Marke St3, Ck15 oder C22 besteht.

5. Nadellager nach Anspruch 1, **dadurch gekennzeichnet, dass** Wälzkörper (7) aus einem durchhärtenden Stahl der Marke 100Cr6 gefertigt sind.

6. Verfahren zur thermochemischen Behandlung von Wälzlagerbauteilen (1, 6, 7) nach den Ansprüchen 1 bis 5, **dadurch gekennzeichnet, dass** die Austenitisierung in einer aufkohlenden oder aufkohlenden/aufstickenden Schutzgasatmosphäre bei 840 - 870°C innerhalb von maximal 30 Minuten erfolgt.

7. Verfahren zur thermochemischen Behandlung von Wälzlagerbauteilen (1, 6, 7) nach den Ansprüchen 1 bis 6, **dadurch gekennzeichnet, dass** ein Anlassen in einem Temperaturbereich von 180 - 280°C erfolgt.

## Claims

1. Thin-walled rolling bearing component, such as a rolling bearing ring, a needle case or a needle bush (1), which is produced without cutting from a cold-rolled strip, **characterized in that** the cold-rolled strip is a heat-treated steel with the following mechanical characteristic values:
- a tensile strength ≤ 480 N/mm²
- an elongation at break ≥ 24%
- a yield strength ≤ 380 N/mm²
- an anisotropy value R of 0.85 to 1.05 with an ΔRmax = 0.3 mm
and the cold-formed rolling bearing component, after carburizing or nitriding austenitization, has a surface hardness of ≥ 700 HV and a core hardness of ≤ 650 HV the heat-treated steel having the following chemical composition:
- 0.30 - 0.55 % of C
- max. 0.15 % of Si
- 0.3 - 1.0 % of Mn
- max. 0.15 % of Mo
- Max. 0.50 % of Cr
- max. 0.015 % of P
- max. 0.005 % of S
- max. 0.20 % of Cu
- max. 0.20 % of Ni
- max. 0.005 % of Sn
- max. 0.002 % of Sb
- 0.60 - 1.25 % sum of Cu, Ni, Mn, Cr
- 0.002 - 0.080% sum of Al, Ti, Nb
- 0.004 - 0.010% of N₂

2. Rolling bearing component according to Claim 1, **characterized in that** the surface hardness is 860-880 HV and the core hardness is 550-650 HV.

3. Rolling bearing component according to Claim 1, **characterized in that** the cold-rolled strip has the following chemical composition, depending on its wall thickness:
0.6 - 1.1 mm: 0.30-0.40% of C, max. 0.10% of Si, 0.4-0.6% of Mn, max. 0.05% of Mo, 0.20-0.30% of Cr, 0.015% of P, 0.005% of S,
1.1 - 1.8 mm: 0.30-0.50% of C, max. 0.10% of Si, 0.6-0.8% of Mn, max. 0.05% of Mo, 0.20-0.30% of Cr, 0.015% of P, 0.005% of S,
1.8 - 3.5 mm: 0.40-0.55% of C, 0.10% of Si, 0.8-1.0% of Mn, 0.15% of Mo, 0.30-0.40% of Cr, 0.015% of P, 0.005% of S.

4. Needle bearing according to Claim 1, **characterized in that** a cage (6) consists of a case-hardening steel of type St3, Ck15 or C22.

5. Needle bearing according to Claim 1, **characterized in that** rolling bodies (7) are produced from a steel which hardens all the way through, of type 100Cr6.

6. Process for the thermochemical treatment of rolling bearing components (1, 6, 7) according to Claims 1 to 5, **characterized in that** the austenitizing takes place in a carburizing or carburizing/nitriding protective-gas atmosphere at 840-870°C over the course of at most 30 minutes.

7. Process for the thermochemical treatment of rolling bearing components (1, 6, 7) according to Claims 1 to 6, **characterized in that** tempering is carried out in a temperature range from 180-280°C.

## Revendications

1. Composant de roulement à paroi mince fabriqué sans enlèvement de copeaux, comme des bagues de roulement, des douilles d'aiguilles ou des bagues d'aiguilles (1), qui ont été fabriquées à partir d'une bande à froid, **caractérisé en ce que** la bande à froid est un acier de traitement présentant les caractéristiques mécaniques suivantes:
- résistance à la traction ≤ 480 N/mm²
- allongement à la rupture ≥ 24%
- limite d'élasticité ≤ 380 N/mm²
- coefficient d'anisotropie R de 0,85 à 1,05, avec une ΔRmax ≈ 0,3 mm
et le composant de roulement déformé à froid présente, après une austénitisation avec cémentation ou nitruration, une dureté de surface de ≥ 700 HV et une dureté à coeur de ≤ 650 HV, dans lequel l'acier de traitement présente la composition chimique suivante:
- 0,30 - 0,55 % C
- max. 0,15 % Si
- 0,3 - 1,0 % Mn
- max. 0,15 % Mo
- max. 0,50 % Cr
- max. 0,015 % P
- max. 0,005 % S
- max. 0,20 % Cu
- max. 0,20 % Ni
- max. 0,005 % Sn
- max. 0,002 % Sb
- 0,60 - 1,25 % somme de Cu, Ni, Mn, Cr
- 0,002 - 0,080 % somme de Al, Ti, Nb
- 0,004 - 0,010 % N₂

2. Composant de roulement selon la revendication 1, **caractérisé en ce que** la dureté de surface vaut 860 - 880 HV et la dureté à coeur vaut 550 - 650 HV.

3. Composant de roulement selon la revendication 1, **caractérisé en ce que** la bande à froid présente, en fonction de son épaisseur de paroi, la composition chimique suivante:
| | |
|---|---|
| 0,6 - 1,1 mm: | 0,30-0,40% C, max. 0,10% Si, 0,4-0,6% Mn, max. 0,05% Mo, 0,20-0,30% Cr, 0,015% P, 0,005% S, |
| 1,1 - 1,8 mm: | 0,30-0,50% C, max. 0,10% Si, 0,60-0,8% Mn, max. 0,05% Mo, 0,20-0,30% Cr, 0,015% P, 0,005% S, |
| 1,8 - 3,5 mm: | 0,40-0,55% C, 0,10% Si, 0,8-1,0% Mn, 0,15% Mo, 0,30-0,40% Cr, 0,015% P, 0,005% S. |

4. Roulement à aiguilles selon la revendication 1, **caractérisé en ce qu'**une cage (6) se compose d'un acier de cémentation de la nuance St3, Ck15 ou C22.

5. Roulement à aiguilles selon la revendication 1, **caractérisé en ce que** des corps de roulement (7) sont fabriqués en un acier trempant à coeur de la nuance 100Cr6.

6. Procédé de traitement thermochimique de composants de roulement (1, 6, 7) selon les revendications 1 à 5, **caractérisé en ce que** l'on effectue l'austénitisation dans une atmosphère de gaz protecteur de cémentation ou de cémentation/nitruration à 840 - 870°C pendant un maximum de 30 minutes.

7. Procédé de traitement thermochimique de composants de roulement (1, 6, 7) selon les revendications 1 à 6, **caractérisé en ce que** l'on effectue un revenu dans une plage de température de 180 - 280°C.
